# EUROPÄISCHE PATENTSCHRIFT

(11) **EP 0 935 510 B1**
(45) Veröffentlichungstag und Bekanntmachung des Hinweises auf die Patenterteilung: **12.09.2001**
(21) Anmeldenummer: 97948856.6
(22) Anmeldetag: 03.11.1997
(51) Int. Cl.: B23Q 1/01

(54) **WERKZEUGMASCHINE ZUR SPANENDEN BEARBEITUNG GROSSER BAUTEILE**
MACHINE TOOL FOR MACHINING LARGE SIZED COMPONENTS BY STOCK REMOVAL
MACHINE-OUTIL POUR L'USINAGE PAR ENLEVEMENT DE COPEAUX DE GROSSES PIECES

(30) Priorität: 04.11.1996 DE 19645324
(43) Veröffentlichungstag der Anmeldung: 18.08.1999
(73) Patentinhaber: DS Technologie Werkzeugmaschinenbau GmbH, 41236 Mönchengladbach (DE)
(72) Erfinder: IHLENFELDT, Edwin, D-06449 Aschersleben (DE)
(74) Vertreter: Rehders, Jochen
(86) Internationale Anmeldenummer: EP9706036
(87) Internationale Veröffentlichungsnummer: WO9819819

(56) Entgegenhaltungen:
- EP-A- 0 420 735
- DE-A- 2 405 163
- DE-U- 9 218 186
- GB-A- 2 179 322
- US-A- 1 422 140
- US-A- 3 800 636

## Beschreibung

Die Erfindung betrifft eine Werkzeugmaschine zur spanenden Bearbeitung großer Bauteile, insbesondere von Flugzeug-Integral-Bauteilen aus Aluminiumlegierungen mit großem Zerspanungsvolumen.

Diese Bauteile können Längen von 2 bis 30 m, Breiten von 2 bis 4 m und Höhen bis zu 0,5 m erreichen und werden mit einem-Zerspanungsgrad von über 90 % bearbeitet. Hierzu ist eine möglichst große Zerspanungsleistung der Bearbeitungswerkzeuge erforderlich, die dazu noch mit großer Geschwindigkeit sowie großen Beschleunigungen und Verzögerungen verfahrbar sein sollen.

Stand der Technik bei diesen Werkzeugmaschinen ist es, über einem auf einem Maschinenbett angeordneten feststehenden Tisch zur Aufnahme von Paletten mit dem Werkstück eine Portalwerkzeugmaschine anzuordnen, deren parallelen, senkrechten Ständer auf Führungen zu beiden Seiten des Maschinenbetts verfahrbar sind und an einem Querbalken bis zu drei unabhangig quer verfahrbare Bearbeitungswerkzeuge tragen. Die Spindeldrehzahl der Bearbeitungswerkzeuge beträgt hierbei 10.000 bis 30.000 min⁻¹, und die Ständer mit den Querbalken, den Werkzeugen und deren Antrieben werden beim Verfahren mit 0,2 bis 0,5 g beschleunigt. Aus diesem Grunde wirkt der Verfahrantrieb für die Ständer gleichzeitig mit den Führungen eines jeden Ständers so zusammen, daß die bewegten Massen des Portals gleichmäßig und synchron beschleunigt und abgebremst werden.

Diese bekannte Bauweise einer Werkzeugmaschine zur spanenden Bearbeitung großer Bauteile ist aufwendig und führt wegen der großen bewegten Masse zu Schwierigkeiten, der Beschleunigung und Abbremsung des Antriebs genau zu folgen.

Diese Nachteile werden auch nicht durch die aus der DE 44 02 846 A1 bekannten Werkzeugmaschine vermieden, die einen verfahrbaren Ständer mit einem Ausleger aufweist, auf dem ein in mehreren Achsen bewegbares Bearbeitungswerkzeug mit seinen Antrieben verfahrbar ist, wobei sich der Ausleger auf Führungen eines zusätzlichen, als Gitterstruktur ausgebildeten, von Stützen getragenen Querträgers abstützt.

Aus der EP-A-0 420 735 ist eine Werkzeugmaschine zur spanenden Bearbeitung großer Bauteile bekannt, die einen auf einem Fundament oder Maschinenbett auf Führungen verfahrbaren Ständer aufweist, an dem unmittelbar mindestens ein in mehreren Achsen bewegbares Bearbeitungswerkzeug mit seinen Antrieben angeordnet ist, wobei eine senkrechte Stützstruktur aus Beton mit Führungen für das obere Ende des Ständers hinter dem Ständer angeordnet ist und wenigstens ein mit den Führungen des Maschinenbetts und der Stützstruktur synchron zusammenwirkender Verfahrantrieb für den Ständer vorgesehen ist. Das Bearbeitungswerkzeug ist somit von der Stützstruktur abgewandt, so daß die Bearbeitung eines Werkstücks auf der der Stützstruktur abgewandten Seite des Ständers erfolgt.

Der Erfindung liegt das Problem zugrunde, eine Werkzeugmaschine zur spanenden Bearbeitung großer Bauteile so zu verbessern, daß bei einfachem Aufbau und Verringerung der zu bewegenden Massen eine genaue Führung bei großen Beschleunigungen und Verzögerungen erreicht wird, um dadurch die Zerspanungsleistung und die Bearbeitungsgenauigkeit zu vergrößern. Zusätzlich soll bei der Werkzeugmaschine die Spanabfuhr verbessert werden.

Ausgehend von dieser Problemstellung wird bei einer Werkzeugmaschine mit wenigstens einem auf einem Maschinenbett auf Führungen verfahrbaren Ständer, an dem unmittelbar mindestens ein in mehreren Achsen bewegbares Bearbeitungswerkzeug mit seinen Antrieben angeordnet ist, einer Stützstruktur aus Beton mit einer Führung für das obere Ende des Ständers, wenigstens einem mit den Führungen des Maschinenbetts und der Stützstruktur synchron zusammenwirkenden Verfahrantrieb für den Ständer vorgeschlagen, daß erfindungsgemäß die dem Ständer zugewandte Seite der Stützstruktur als Träger für ein senkrecht angeordnetes Werkstück ausgebildet ist und daß die Führungen des Ständers justierbar sind.

Mit der erfindungsgemäßen Ausbildung der Werkzeugmaschine wird die Portalbauweise verlassen. Das oder die Bearbeitungswerkzeuge mit ihren Antrieben sind verfahrbar unmittelbar am ebenfalls verfahrbaren Ständer angeordnet, der einerseits auf den Führungen des Maschinenbetts aufsteht und andererseits mit seinem oberen Ende an der Stützstruktur aus Beton geführt ist. Dabei greift der Verfahrantrieb sowohl an den Führungen am Maschinenbett als auch an den Führungen an der Stützstruktur an, so daß ein Verfahren des Ständers mit großen Beschleunigungen und Verzögerungen möglich ist. Da nur der Ständer mit den daran angeordneten Werkzeugen und Antrieben zu bewegen ist, ist seine Masse gegenüber einer Werkzeugmaschine in Portalbauweise erheblich verringert, so daß sich die Beschleunigungen und Verzögerungen sowie die Verfahrgeschwindigkeit gegenüber dem Stand der Technik noch weiter erhöhen lassen und somit auch bei gleicher Genauigkeit die Zerspanungsleistung steigt. Vorzugsweise können auch das Fundament oder das Maschinenbett aus Beton hergestellt und daran die Führungen justierbar befestigt sein. Mit der senkrechten Anordnung des Werkstücks wird eine erheblich erleichterte Späneabfuhr erreicht, da die Späne vom Werkzeug herabfallen und sich problemlos mittels der ohnehin zur Kühlung der Bearbeitungswerkzeuge verwendeten Kühlflüssigkeit vom Werkstück abspülen lassen.

Vorteilhafterweise können für den Ständer zwei elektrische, gesteuert synchron laufende Fahrantriebe vorgesehen sein, die jeweils mit der Führung am Maschinenbett und der Führung an der Stützstruktur zusammenwirken.

Vorteilhafterweise kann eine Führung für den Ständer auf der Oberkante der Stützstruktur angeordnet sein und kann die dem Ständer zugewandte Seite der Stützstruktur Aufnahmen für auswechselbare, ein Werkstück tragende Paletten aufweisen, so daß sich während der Bearbeitung eines Werkstücks ein weiteres Werkstück auf einer Palette vorbereiten und schnell gegenüber ein fertigbearbeitetes Werkstück auswechseln läßt.

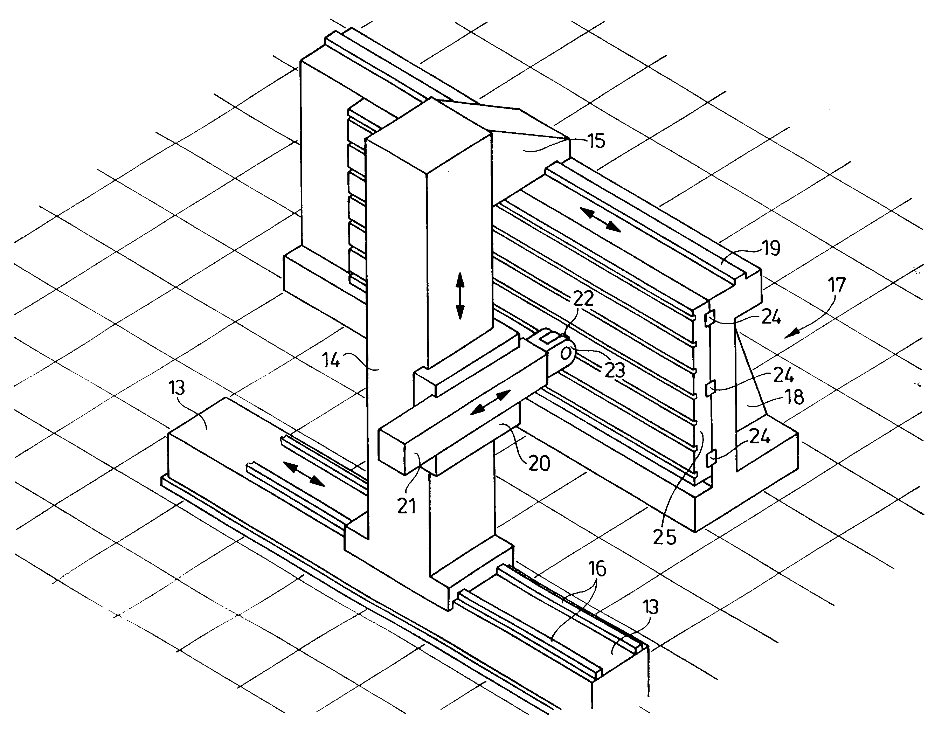

Die Erfindung wird nachstehend anhand eines in der Zeichnung dargestellten Ausführungsbeispiels des näheren erläutert, die eine Werkzeugmaschine mit einer an einer Stützstruktur angeordneten senkrechten Palette für ein zu bearbeitendes Werkstück zeigt.

Bei der dargestellten Ausführungsform kann der Ständer 14 längs des Bettes 13 auf den Führungen 16 fahren. Parallel zu der Führuna 16 ist eine Stützstruktur 17 in Form einer senkrechten Betonwand angeordnet, die durch regelmäßig angeordnete Strebpfeiler 18 zusätzlich abgestützt ist. Auf der Oberseite der Stützstruktur 17 befindet sich eine Führung 19, die parallel zu den Führungen 16 verläuft. Der Ständer 14 weist einen Ausleger 15 auf, der die Führung 19 übergreift. An einem in senkrechter Richtung verfahrbaren Schlitten 20 ist ein waagerechter Träger 21 angeordnet, der ein Bearbeitungswerkzeug 22 mit seinem Antrieb trägt. Das Bearbeitungswerkzeug 22 mit seinem Antrieb ist in einer Gabelaufnahme 23 am Träger 21 angeordnet und läßt sich daher mehrachsig bewegen.

An der Stützstruktur 17 sind Aufnahmen 24 für eine Palette 25 angeordnet, die ein nicht dargestelltes, zu bearbeitendes Werkstück trägt.

Die Führungen 16 und die Stützstruktur 17 mit der Führung 19 lassen sich sehr lang ausbilden, um Werkstücke mit einer Länge von 2 bis 30 m, einer Breite 2 bis 4 m und einer Dicke von bis zu 0,5 m bearbeiten zu können. Durch die senkrechte Anordnung des Werkstücks ist die Späneabfuhr erheblich erleichtert, da die Späne bereits durch die Schwerkraft nach unten fallen und sich aus durch die Bearbeitung hergestellten Hohlräumen mittels der zur Kühlung des Bearbeitungswerkzeugs 22 erforderlichen Kühlflüssigkeit leicht herausspülen lassen. Mehrere Ständer 14 lassen sich auf der Führung 16 anordnen, um besonders lange Werkstücke an mehreren Stellen gleichzeitig bearbeiten zu können.

Die Führungen 16, 19 sowie die Aufnahmen 24 für Paletten 25 sind justierbar, um etwaige Ungenauigkeiten in der Oberfläche der Stützstruktur 17 und des Maschinenbetts 13 ausgleichen zu können.

## Patentansprüche

1. Werkzeugmaschine zur spanenden Bearbeitung großer Bauteile, insbesondere von Flugzeug-Integral-Bauteilen aus Aluminiumlegierungen mit großem Zerspanungsvolumen, mit wenigstens einem auf einem Maschinenbett (13) auf Führungen (16) verfahrbaren Ständer (14), an dem unmittelbar mindestens ein in mehreren Achsen bewegbares Bearbeitungswerkzeug 22) mit seinen Antrieben angeordnet ist, einer Stützstruktur (17) aus Beton mit einer Führung (19) für das obere Ende des Ständers (14), wenigstens einem mit den Führungen (16, 19) des Maschinenbetts (13) und der Stützstruktur (17) synchron zusammenwirkenden Verfahrantrieb für den Ständer (14), **dadurch gekennzeichnet, daß** die dem Ständer (14) zugewandte Seite der Stützstruktur (17) als Träger fur ein senkrecht angeordnetes Werkstück ausgebildet ist und daß die Fuhrungen (16, 19 justierbar sind.

2. Werkzeugmaschine nach Anspruch 1, **gekennzeichnet durch** zwei elektrische, gesteuert synchron laufende Verfahrantriebe für den Ständer (14) .

3. Werkzeugmaschine nach Anspruch 1 oder 2, **dadurch gekennzeichnet, daß** das Maschinenbett (13) aus Beton hergestellt ist.

4. Werkzeugmaschine nach Anspruch 1 oder 2, **dadurch gekennzeichnet, daß** die Führungen (16) am Maschinenbett (13) justierbar befestigt sind.

5. Werkzeugmaschine nach Anspruch 1, **dadurch gekennzeichnet, daß** die Führung (19) für den Ständer (14) auf der Oberkante der Stützstruktur (17) angeordnet sind und die dem Ständer (14) zugewandte Seite der Stützstruktur (17) Aufnahmen (24) für auswechselbare, ein Werkstück tragende Paletten (25) aufweist.

## Claims

1. Machine tool for machining large-sized components by stock removal, in particular aircraft integral components made from aluminium alloys and involving high-volume metal removal; which has at least one column (14) which can be moved on guide rails (16) on a machine bed (13) and on which is directly located at least one machining tool (22) with its drive mechanism, these being capable of movement along various axes; which has a supporting structure (17) made from concrete with a guide rail (19) for the top of the column (14); which has at least one traverse drive for the column (14) operating synchronously with the guide rails (16, 19) of the machine bed (13) and the supporting structure (17), **characterised by** the fact that the side of the supporting structure (17) which faces the column (14) is shaped to form a holder for a vertical workpiece, and that the guide rails (16, 19) are adjustable.

2. Machine tool as in Claim 1, **characterised by** two electric, controlled synchronously moving traverse drives for the column (14).

3. Machine tool as in Claim 1 or 2, **characterised by** the fact that the machine bed (13) is made of concrete.

4. Machine tool as in Claim 1 or 2, **characterised by** the fact that the guide rails (16) are secured to the machine bed (13) in such a way that they are adjustable.

5. Machine tool as in Claim 1, **characterised by** the fact that the guide rail (19) for the column (14) is located on the top edge of the supporting structure (17), and that the side of the supporting structure (17) facing the column (14) has holding fixtures (24) for removable pallets (25) to hold a workpiece.

## Revendications

1. Machine-outil pour usinage par enlèvement de copeaux de grands composants, en particulier de composants intégrés d'avions, en alliages d'aluminium, avec un grand volume de copeaux enlevés, comportant au moins un montant (14), qui est déplaçable sur des guides (16) sur un banc de machine (13) et sur lequel est disposé directement au moins un outil d'usinage (22), déplaçable suivant plusieurs axes, avec ses dispositifs d'entraînement, comportant une structure de soutien (17) en béton avec un guide (19) pour l'extrémité supérieure du montant (14), et comportant au moins un dispositif d'entraînement en translation pour le montant (14), qui coopère de manière synchrone avec les guides (16, 19) du banc de machine (13) et avec la structure de soutien (17), **caractérisée en ce que** le côté de la structure de soutien (17) tourné vers le montant (14), est conformé en montant pour une pièce à usiner disposée verticalement, et en ce que les guides (16, 19) peuvent être ajustés.

2. Machine-outil selon la revendication 1, **caractérisée par** deux dispositifs d'entraînement en translation électriques, commandés de manière synchrone, pour le montant (14).

3. Machine-outil selon la revendication 1 ou 2, **caractérisée en ce que** le banc de machine (13) est réalisé en béton.

4. Machine-outil selon la revendication 1 ou 2, **caractérisée en ce que** les guides (16) sont fixés au banc de machine (13) de manière à pouvoir être ajustés.

5. Machine-outil selon la revendication 1, **caractérisée ce que** le guide (19) du montant (14) est disposé sur le bord supérieur de la structure de soutien (17) et le côté de la structure de soutien (17), tourné vers les montant (14), présente des logements (24) pour des palettes (25) échangeables, qui portent une pièce à usiner.
